# EUROPEAN PATENT SPECIFICATION

(11) **EP 1 655 464 B1**
(45) Date of publication and mention of the grant of the patent: **09.01.2013**
(21) Application number: 05024088.6
(22) Date of filing: 04.11.2005
(51) Int. Cl.: F02B 27/02, F02M 35/16, F02M 35/10

(54) **Engine**
Motor
Moteur

(30) Priority: 04.11.2004 JP 2004320253
(43) Date of publication of application: 10.05.2006
(73) Proprietor: Yamaha Hatsudoki Kabushiki Kaisha, Iwata-shi, Shizuoka-ken (JP)
(72) Inventor: Konakawa, Tsugunori, Iwata-shi Shizuoka-ken (JP)
(74) Representative: Grünecker, Kinkeldey, Stockmair & Schwanhäusser

(56) References cited:
- EP-A1- 1 293 653
- EP-A1- 1 304 461
- US-B1- 6 202 627

## Description

The present invention relates to an engine according to the preamble of independent claim 1 and a vehicle provided with the same. Such an engine can be taken from the prior art document EP 1 304 461 A1. Prior art document EP 1 304 461 A1 discloses an intake manifold for an internal combustion engine with multiple and independent intake passages. The intake manifold comprises a first volume chamber in combination with a second volume chamber and a valve for conducting/shutting off between the second volume chamber and their respective intake passages. Said valve is controlled in consideration of dynamic effects of intake air flow. Prior art document EP 1 293 653 A1 relates to an apparatus for mixing air and fuel in an internal combustion engine and discloses means for varying the length of an intake passage. Prior art document US 6,202,627 B1 discloses a V-type multi cylinder internal combustion engine with an intake manifold having multiple and individual passages wherein individual control valves are provided in order to improve operation performance with regards to rotational speed.

Conventionally, an engine is known comprising a so-called upstream injector that jets a fuel to a location positioned in an intake path and relatively distant from a combustion chamber (for example, see JP-A-10-196494 and JP-A-2004-100632). In the engine disclosed in these documents, an upstream injector is provided upstream of a throttle valve and used together with a downstream injector, which is provided downstream of the throttle valve. With the engine, the upstream injector and the downstream injector are used in combination to enable an increase in fuel injection quantity. Also, a high-grade injection control can be realized by regulating the upstream injector and the downstream injector in injection timing. In this manner, with the engine, an improvement in engine performance is achieved by making use of the upstream injector.

In recent years, a great improvement in engine performance is desired. However, the conventional configuration, in which an upstream injector is made use of, already approaches a limit of an improvement in performance and a great improvement in engine performance cannot be expected as it is.

The invention has been thought of in view of the matter and has its object to provide an engine-as indicated above and a vehicle provided with such engine that achieve a great improvement in engine performance by making use of an upstream injector in a new configuration.

This objective is solved in an inventive manner by an engine having the features of independent claim 1. Preferred embodiments are laid down in the dependent claims.

Accordingly, it is provided an engine comprising an introduction port through which air is introduced into an intake chamber, an intake passage, which includes an opening opened into the intake chamber and through which the air in the intake chamber is led from the opening to a combustion chamber, an injector that jets fuel between the introduction port and the opening, an exhaust passage, through which combustion gases are led from the combustion chamber, and a control mechanism configured to vary torque characteristics by making use of pressure waves generated in at least one of the intake passage and the exhaust passage so as to eliminate valleys in a torque characteristic curve indicating a change in torque relative to a change in engine speed.

Preferably, the control mechanism varies the torque characteristics at a larger rate than that, at which the torque characteristics varies due to fuel injection of the injector.

Further, preferably the control mechanism exercises control to synchronize phase of pressure waves generated in the intake passage and timing of intake of the combustion chamber with each other.

Still further, preferably the control mechanism exercises control to synchronize phase of pressure waves generated in the exhaust passage and timing of exhaust of the combustion chamber with each other.

Yet further, preferably the control mechanism comprises a passage length varying mechanism that varies a length of the intake passage. Therein, the passage length varying mechanism may comprise a cylindrical-shaped body having an upstream-side opening and a downstream-side opening, and a drive mechanism that relatively moves the cylindrical-shaped body and the intake passage in a direction along the passage. Therein, the injector might jet a fuel on an upstream side of the upstream-side opening disposed when the cylindrical-shaped body is moved to an upstream-most side. Therein, the intake passage might be fixed to the engine body, and the drive mechanism moves the cylindrical-shaped body. Therein, the injector might jet a fuel so as to have the same spreading on the upstream side of the upstream-side opening. Therein, the drive mechanism might relatively move the cylindrical-shaped body and the intake passage between a first state, in which the cylindrical-shaped body and the intake passage contact with each other, and a second state, in which the cylindrical-shaped body and the intake passage separate from each other.

According to another preferred embodiment, an intake port is formed on the combustion chamber, and the engine further comprises an intake valve that opens and closes the intake port, and a valve opening and closing mechanism that drives the intake valve, wherein the control mechanism comprises an intake timing varying mechanism that varies timing of opening and closing of and a period of timing of opening of the intake valve caused by the valve opening and closing mechanism.

According to a further preferred embodiment, the control mechanism comprises a passage length varying mechanism that varies a length of the exhaust passage.

According to yet another preferred embodiment, an exhaust port is formed on the combustion chamber, and the engine further comprises an exhaust valve that opens and closes the exhaust port, and a valve opening and closing mechanism that drives the exhaust valve, wherein the control mechanism comprises an exhaust timing varying mechanism that varies timing of opening and closing of and a period of timing of opening of the exhaust valve caused by the valve opening and closing mechanism.

According to still another preferred embodiment, the engine further comprises a reflecting member that reflects pressure waves, wherein the control mechanism comprises a reflection area varying mechanism that varies an area of reflection by the reflecting member.

Additionally, the engine might further comprise a downstream injector that jets a fuel between the throttle valve and the combustion chamber, and an injection control device that controls the injector and the downstream injector, wherein the injection control device continues fuel injection from the injector before and after the control mechanism exercises the control.

Moreover, the engine might further comprise a downstream injector that jets a fuel between the throttle valve and the combustion chamber, and an injection control device that controls the injector and the downstream injector, wherein the injection control device maintains a ratio of injection of the injector and the downstream injector before and after the control mechanism exercises the control.

Likewise, the engine might further comprise a downstream injector that jets a fuel between the throttle valve and the combustion chamber, and an injection control device that controls the injector and the downstream injector, wherein the injection control device makes a ratio of injection of the injector smaller than a ratio of injection of the downstream injector when a flow rate of an air to the combustion chamber is less than a predetermined amount, and makes a ratio of injection of the injector a constant ratio of injection, which is smaller than a ratio of injection of the downstream injector.

Also, in the engine, at least a part of the control mechanism might be arranged in the intake chamber.

According to a further embodiment, a vehicle comprises the engine according to one of the above embodiments.

In the following, the present invention is explained in greater detail with respect to several embodiments thereof in conjunction with the accompanying drawings, wherein:
- Fig. 1: is a side view showing a motorcycle,
- Fig. 2: is a cross sectional view showing an essential part of an engine according to a first embodiment,
- Fig. 3: is a cross sectional view showing an essential part of the engine according to the first embodiment,
- Fig. 4: is an exploded, plan view showing an air cleaner,
- Fig. 5(a): is a graph indicating the relationship between an engine speed and a ratio of injection of upstream injectors, Fig. 5(b) shows a torque characteristic curve, and Fig. 5(c) is a graph indicating the relationship between an engine speed and an intake passage length,
- Fig. 6: is a side view showing an essential part of an engine according to a second embodiment,
- Fig. 7: is a cross sectional view showing an interior of an air cleaner according to the second embodiment,
- Fig. 8: is a cross sectional view showing the interior of the air cleaner according to the second embodiment,
- Fig. 9: is a view showing the construction of a valve operating device according to a third embodiment,

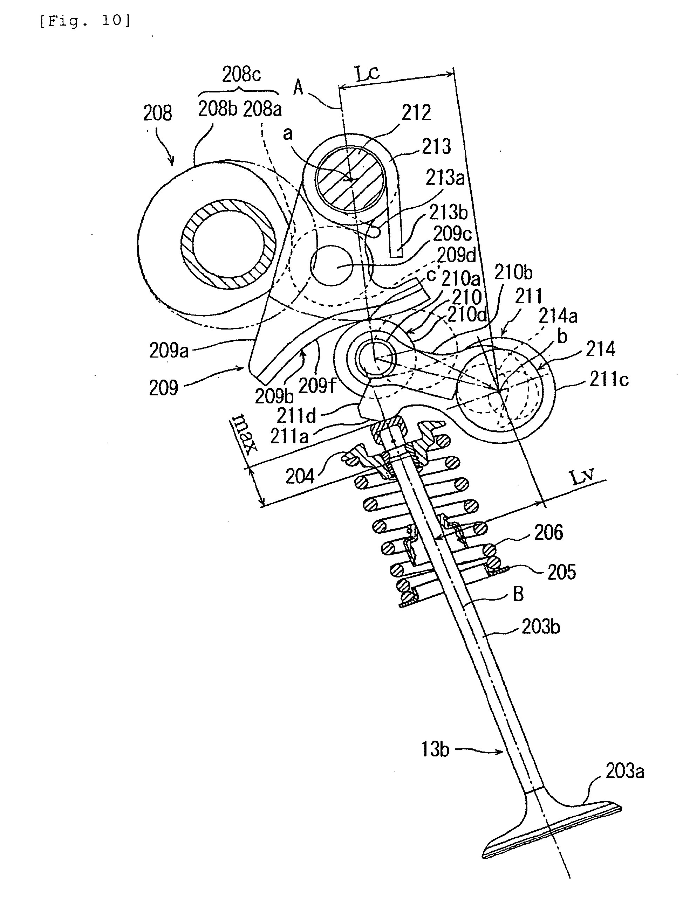

- Fig. 10: is a view showing the construction of the valve operating device according to the third embodiment,
- Fig. 11: is a view illustrating the relationship between a cam angle and lift,
- Fig. 12: is a schematic view showing the construction of an engine according to a fourth embodiment,
- Fig. 13: is a schematic view showing the construction of an engine according to a fifth embodiment, and
- Fig. 14: is a schematic view showing the construction of an engine according to a further embodiment.

Prior to explanation of embodiments of the invention, the principle of an improvement in engine performance will be first described.

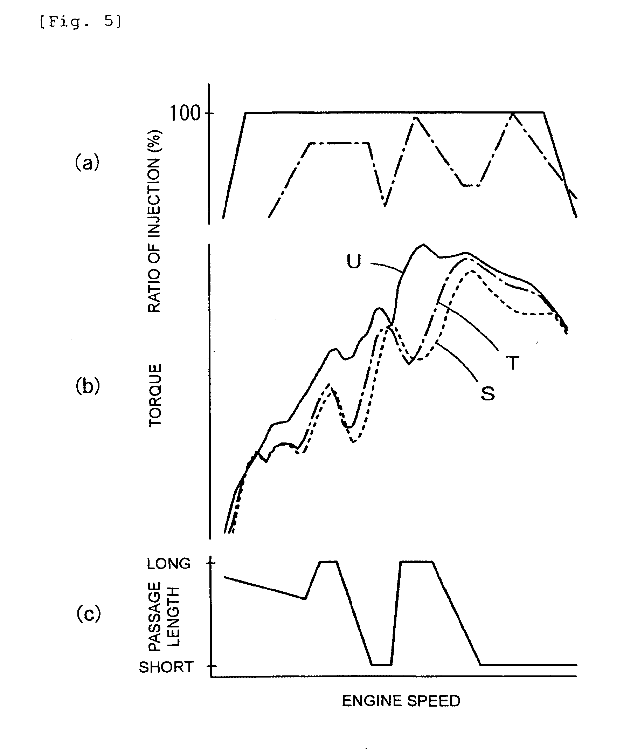

Normally, a torque characteristic curve of an engine (a curve indicative of a change in torque relative to engine speed (or a rotating speed), for example, a curve with engine speed on the axis of abscissa and torque on the axis of ordinate makes a convex curve, in which torque is maximum at a predetermined rotating speed. Since pressure waves are actually generated in an intake passage or an exhaust passage as an intake valve or an exhaust valve opens and closes, however, mountains and valleys are formed partially on the torque characteristic curve of an engine due to the dynamic effect of intake or exhaust. That is, the torque characteristic curve of an engine makes a generally convex curve (see a curve S in Fig. 5(b)) partially having alternate mountains and valleys (referred below to as torque valley).

Here, when in place of, or together with a downstream injector, an upstream injector jets a fuel, torque valleys can be apparently filled with the result that it is possible to achieve an improvement in engine performance. That is, it is thought that an upstream injector functions to fill torque valleys.

However, the inventors of the present application have found, as a result of the continued study, that while torque valleys are apparently filled by an upstream injector, the torque characteristic curve only shifts to a side of low rotating speed (the left side in Fig. 5(b)) (see a curve T in Fig. 5(b)). That is, the torque characteristic curve to the side of low rotating speed whereby torque valleys also shift to the side of low rotating speed with the result that original torque valleys disappear apparently. However, the torque characteristic curve itself is not moved upward (a side, on which torque is increased). Therefore, a certain limit to an improvement in torque characteristics is present only with an upstream injector.

By the way, since an upstream injector is disposed in a position away from a combustion chamber, it is possible to expedite atomization of a fuel. Also, since an air can be evaporated and cooled by atomization of a fuel to be increased in air density, an engine can be increased in volumetric efficiency. In this manner, an upstream injector has various functions.

When an air is cooled, however, an air is varied in acoustic velocity. Therefore, when a fuel is jetted from an upstream injector, torque valleys can be filled but pulsation waves generated in an intake passage are varied in period, so that new torque valleys are generated. Accordingly, only with an upstream injector, appearance of torque valleys cannot be avoided and it is difficult to greatly improve the engine performance.

Hereupon, the inventors of the present application have thought of having an upstream injector demonstrating its inherent capacity to the maximum through introducing a separate mechanism, which restricts torque valleys, to combine the upstream injector with the mechanism. That is, the effect of expediting atomization of a fuel and the effect of an increase in volumetric efficiency, produced by an upstream injector are made a maximum use of by using the mechanism to restrict torque valleys.

Embodiment of the invention based on the principle will be described below in detail with reference to the drawings.

### (First embodiment)

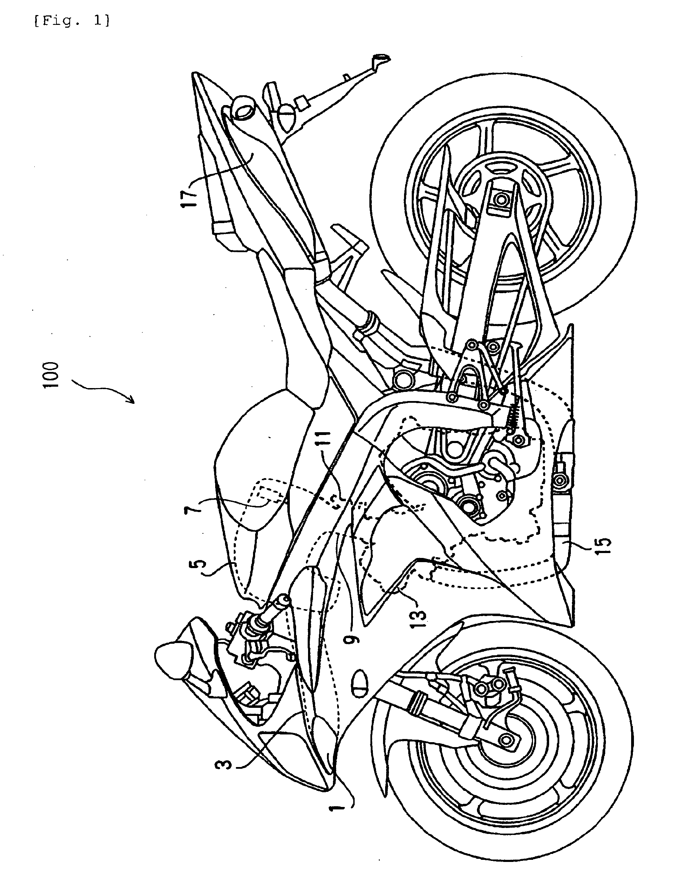

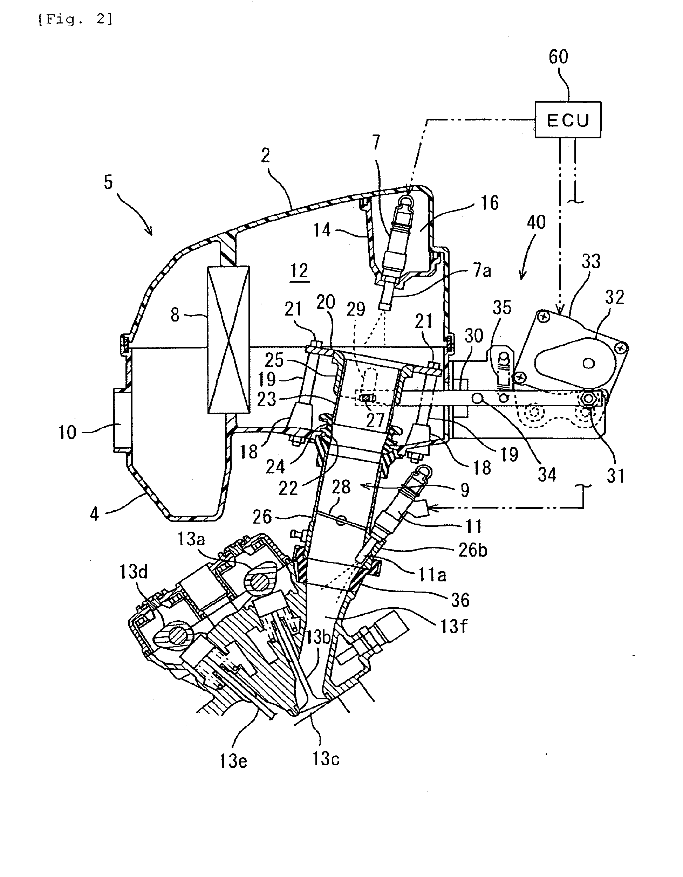

As shown in Fig. 1, a motorcycle 100 comprises an air intake port 1, through which an air is taken in, an air cleaner 5, an engine body 13, and a muffler 17. The air intake port 1 and the air cleaner 5 are connected to each other through an intake duct 3. The air cleaner 5 and combustion chambers 13c (see Fig. 2, not shown in Fig. 1) of the engine body 13 are connected to each other through intake passages 9. The combustion chambers 13c and the muffler 17 are connected to each other through an exhaust passage 15. Upstream injectors 7 are arranged inside the air cleaner 5 and downstream injectors 11 are arranged inside the intake passages 9. The engine is a parallel 4-cylinder engine and the four intake passages 9 are provided along in a vehicle breadth direction (a front-back surface direction in Fig. 1).

As shown in Fig. 2, the air cleaner 5 comprises a lower bowl-shaped casing 4 opened upward, and an upper bowl-shaped casing 2 opened downward. The upper casing 2 and the lower casing 4 are joined together in a state, in which mutual peripheral edges are butted against each other. Thereby, an intake chamber 12 is compartmented inside the upper casing 2 and the lower casing 4. An element 8 is arranged inside the intake chamber 12 to remove dust and impurities contained in the air.

An introduction port 10, through which an air is introduced, is formed on a front side (the left side in Fig. 2) of the lower casing 4. Also, four through-holes 22 aligned in the vehicle breadth direction are formed on a rear portion of a bottom surface of the lower casing 4.

As described above, the four intake passages 9 aligned in the vehicle breadth direction are formed in the engine. The respective intake passages 9 comprise a first funnel 24 fitted into the through-hole 22, a throttle body 26 fitted into the first funnel 24, a joint member 36 connected to a downstream end of the throttle body 26, and an intake port 13f connected to a downstream end of the joint member 36. The first funnel 24 is opened into the intake chamber 12. A throttle valve 28 is provided inside the throttle body 26.

The intake port 13f is communicated to the combustion chamber 13c. Arranged in the intake port 13f is an intake valve 13b driven by an intake cam 13a. Also, an exhaust passage 15 (not shown in Fig. 2, see Fig. 1) is communicated to the combustion chamber 13c. Provided in an exhaust port (not shown) of the exhaust passage 15 is an exhaust valve 13e driven by an exhaust cam 13d.

A mount 26b, to which the downstream injector 11 is mounted, is formed on a portion of the throttle body 26 downstream of the throttle valve 28. The downstream injector 11 is mounted to the mount 26b and a nozzle 11 a of the downstream injector 11 is extended inside the intake passage 9. Accordingly, the downstream injector 11 jets a fuel downstream of the throttle valve 28.

A separate chamber cover 14 is mounted to an inner surface of a rear portion of the upper casing 2. A separate chamber 16 is compartmented between the separate chamber cover 14 and the upper casing 2, and the upstream injectors 7 are arranged in the separate chamber 16. However, nozzles 7a of the upstream injectors 7 extend through the separate chamber cover 14 to extend to the intake chamber 12. The upstream injector 7 is arranged so as to jet a fuel inside the first funnel 24.

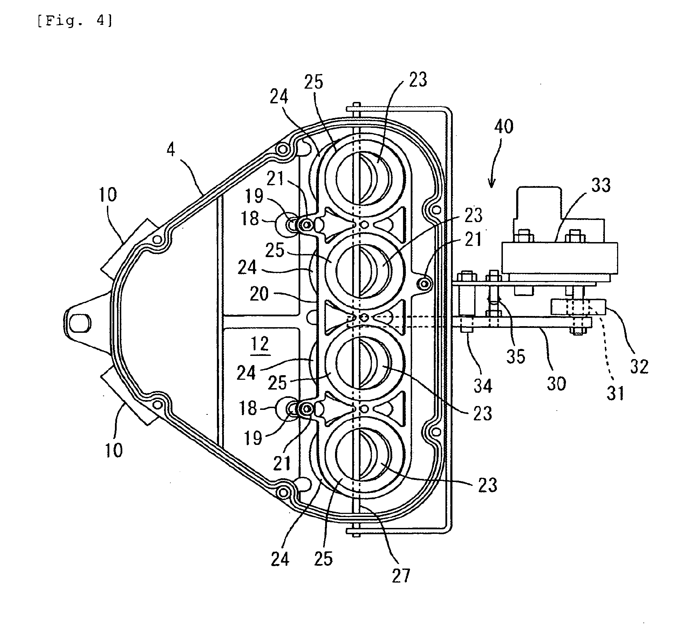

An obliquely upwardly projecting support base 18 is formed on the bottom surface of the rear portion of the lower casing 4. The support base 18 mounts thereto support rods 19 extending in parallel to a direction, in which the first funnels 24 are opened. A support plate 20 extending in the vehicle breadth direction (a front-back surface direction in Fig. 2) is fixed to upper ends of the support rods 19. As shown in Fig. 4, four second funnels 25 aligned in the vehicle breadth direction are fixed to the support plate 20.

Like the first funnels 24, the second funnels 25 comprises a cylindrical-shaped body, of which an upper end is formed to be bell-mouth-shaped. In the embodiment, the second funnels 25 are substantially the same in inside diameter as the first funnels 24. Also, the second funnels 25 are substantially the same in outside diameter as the first funnels 24. However, the first funnels 24 and the second funnels 25 may be different in inside or outside diameter from each other.

The second funnels 25 are arranged on extensions of the first funnels 24. That is, the second funnels 25 are arranged to be coaxial with the first funnels 24. The second funnels 25 are arranged in positions away from the first funnels 24, and clearances are defined between the upstream ends of the first funnels 24 and the downstream ends of the second funnels 25.

Cylinders 23 made of aluminum are inserted inside the second funnels 25. The cylinders 23 are arranged to be coaxial with the first funnels 24 and the second funnels 25. The cylinders 23 have a length substantially equal to a distance between the upstream ends of the first funnels 24 and the downstream ends of the second funnels 25.

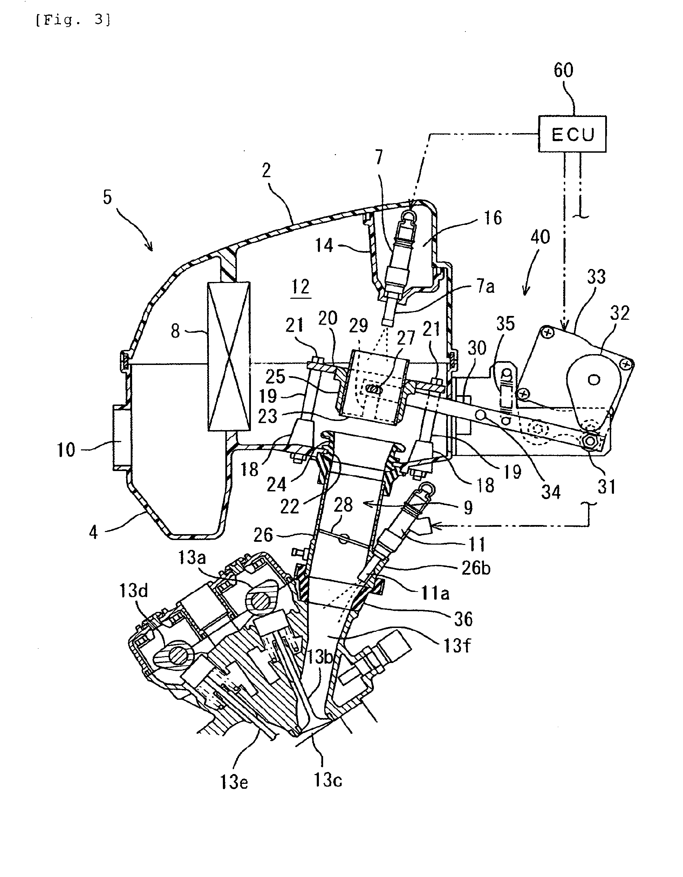

As described later, the cylinders 23 are freely moved in an axial direction. Specifically, the cylinders 23 are moved between positions (see Fig. 2), in which lower ends thereof are fitted into the first funnels 24, and positions (see Fig. 3), in which the lower ends thereof are away from the first funnels 24.

The cylinders 23 have an outside diameter substantially equal to an inside diameter of the second funnels 25. Therefore, no clearances are substantially formed between the cylinders 23 and the second funnels 25. Accordingly, while the cylinders 23 are freely moved axially, the cylinders 23 and the second funnels 25 are contiguous to each other.

Also, the cylinders 23 have an outside diameter substantially equal to an inside diameter of the second funnels 25. Therefore, when the cylinders 23 are fitted into the first funnels 24, the cylinders 23 are made contiguous to the first funnels 24. Irrespective of positions of the cylinders 23, the cylinders 23 are contiguous to the second funnels 25. Accordingly, when the cylinders 23 are fitted into the first funnels 24, the first funnels 24 and the second funnels 25 are made contiguous to each other through the cylinders 23, so that the intake passages 9 are lengthened in total length. In this manner, the cylinders 23 and the second funnels 25 make a part of the intake passages 9 in a state, in which the cylinders 23 are fitted into the first funnels 24.

In a state, in which the cylinders 23 are away from the first funnels 24, the upper ends of the first funnels 24 serve as opened ends of the intake passages 9. On the other hand, in a state, in which the cylinders 23 are fitted into the first funnels 24, the upper ends of the second funnels 25 serve as opened ends of the intake passages 9. Hereinbelow, a state (see Fig. 3), in which the cylinders 23 are away from the first funnels 24, is referred to a short state, and a state (see Fig. 2), in which the cylinders 23 are fitted into the first funnels 24, is referred to a long state.

The second funnels 25 are positioned between the nozzles 7a of the upstream injectors 7 and the first funnels 24. The nozzles 7a are arranged obliquely upward from the upstream ends of the second funnels 25. More specifically, the nozzles 7a are arranged in positions distant a predetermined distance from the upstream ends of the second funnels 25 in an axial direction of the second funnels 25. Also, the nozzles 7a are arranged centrally in openings of the second funnels 25 as viewed in the axial direction of the second funnels 25. That is, the nozzles 7a jet a fuel toward centers of the second funnels 25 from positions away from the upstream ends of the second funnels 25.

In addition, the cylinders 23 project obliquely upward from the second funnels 25 in the short state (see Fig. 3). In the embodiment, the nozzles 7a are positioned obliquely upward from upper ends of the cylinders 23 in the short state. Accordingly, the nozzles 7a jet a fuel toward positions distant obliquely upwardly from the cylinders 23 and the second funnels 25 at all times.

Also, the nozzles 7a jet a fuel in a manner to have the same spreading upstream of the upstream ends of the cylinders 23. Such configuration of jetting can be readily realized by appropriately setting a diameter of the nozzles 7a, a distance of the nozzles 7a from the cylinders 23, a jetting direction of the nozzles 7a, a jet velocity, etc.

Subsequently, an explanation will be given to a moving mechanism that moves the cylinders 23. As shown in Fig. 4, a connection rod 27 extending in the vehicle breadth direction is mounted to the cylinders 23. The connection rod 27 extends through the respective cylinders 23 to connect the four cylinders 23 together. As shown in Fig. 2, slots 29 extending in the axial direction of the second funnels 25 are formed on both sides of the second funnels 25 in the vehicle breadth direction. The connection rod 27 is arranged in the slots 29.

A longitudinally central portion of the connection rod 27 is supported rotatably on one end of a lever 30 extending in a longitudinal direction (a left and right direction in Fig. 2). A cam bearing roller 31 projecting laterally is provided on the other end of the lever 30. A cam 32 and a motor 33 for rotation of the cam 32 are arranged on the other end side of the lever 30. The cam 32 is arranged above the cam bearing roller 31 to contact with the cam bearing roller 31. A middle portion of the lever 30 is supported rotatably on a support shaft 34, and a spring 35 is mounted on a rear side of the support shaft 34 to pull the other end of the lever 30 upward.

When the other end of the lever 30 is lifted by the spring 35, the cylinders 23 are pushed obliquely downward. As a result, the cylinders 23 are fitted into the first funnels 24 to put the intake passages 9 in the long state. On the other hand, when the cam 32 rotates to push down the other end of the lever 30, the cylinders 23 are pushed obliquely upward.

As a result, the cylinders 23 get out from the first funnels 24 and the intake passages 9 are put in the short state.

In this manner, according to the embodiment, a passage length varying mechanism 40 that varies a length (an intake passage length) of the intake passages 9 is formed by the cylinders 23, the second funnels 25, and the moving mechanism that moves the cylinders 23.

In addition, the reference numeral 60 denotes a controller that controls injection of the upstream injectors 7 and the downstream injectors 11 and the passage length varying mechanism 40.

Subsequently, an explanation will be given to air flows in the air cleaner 5 and the intake passages 9.

An air introduced from the introduction port 10 of the air cleaner 5 is purified by the element 8 and then sucked into the intake passages 9. At this time, when the intake passages 9 are put in the long state, an air is sucked from the second funnels 25. On the other hand, when the intake passages 9 are put in the short state, an air is sucked from the first funnels 24. More specifically, a part of the air passes through the second funnels 25 and is then sucked into the first funnels 24, and the remainder of the air is sucked into the first funnels 24 through clearances between the first funnels 24 and the second funnels 25.

In the intake stroke of the engine body 13, the intake valves 13b are opened by the intake cams 13a and a fuel is jetted from one of the upstream injectors 7 and the downstream injectors 11.

By the way, when the intake valves 13b are opened, impulse waves are generated upstream from the vicinity of the intake ports 13f. After the impulse waves are generated, an air and a fuel begin to flow into the combustion chambers 13c, so that the neighborhood of the intake ports 13f is put in a state of negative pressure and pulsation waves being compressional waves of an air are propagated upstream from downstream in the intake passages 9.

The impulse waves arrive at upstream ends of the intake passages 9 to be propagated into the intake chamber 12. On the other hand, the pulsation waves arrive at the upstream ends of the intake passages 9 later than the impulse waves. Since the upstream ends of the intake passages 9 are opened to the intake chamber 12, directions, in which the pulsation waves are propagated, are reversed at the upstream ends of the intake passages 9. The pulsation waves are propagated downstream from upstream in the intake passages 9. An improvement in volumetric efficiency can be achieved by expediting inflow of an air and a fuel into the combustion chambers 13c by the use of those pulsation waves, which are reversed in directions of propagation. That is, torque of the engine can be increased by making the pulsation waves in synchronism with timing of intake.

However, inflow of an air and a fuel is in some cases obstructed unless the time of arrival of pulsation waves is in synchronism with the timing of intake. Here, synchronization of the pulsation waves and the timing of intake depends upon engine speed. Accordingly, a torque characteristic curve of the engine makes a generally convex curve including mountains and valleys as in a curve S shown in Fig. 5(b) and having a maximum value at a predetermined engine speed. In addition, the curve S indicates torque characteristics in the case where the intake passages 9 are fixed in the short state and a fuel is injected only from the downstream injectors 11.

By the way, since the upstream injectors 7 are provided in positions relatively distant from the combustion chambers 13c, time elapsed until a fuel injected from the upstream injectors 7 arrives at the combustion chambers 13c becomes relatively long. Therefore, atomization of a fuel is expedited. Also, time for cooling of an air effected by atomization of a fuel becomes long. Accordingly, the upstream injectors 7 make it possible to increase an air density, thus enabling enhancing the volumetric efficiency of the engine.

On the other hand, a period of pulsation waves depends on the acoustic velocity of an air and the acoustic velocity of an air depends on an air temperature. Accordingly, when an air temperature is decreased by injection of an fuel, the acoustic velocity is correspondingly decreased and pulsation waves are varied in period. Therefore, it can be said that the upstream injectors 7 function to increase an air density and to vary pulsation waves in period.

Hereupon, even when the intake passage length is constant, timing of pulsation waves directed toward the combustion chambers 13c can be adjusted by appropriately regulating fuel injection quantities of the upstream injectors 7. A curve T indicates a torque characteristic curve in the case where the upstream injectors 7 are varied in ratio of injection so as to fill the torque valleys in the curve S while fixing the intake passages 9 in the short state. In addition, an alternate long and short dash line in Fig. 5(a) indicates the ratio of injection of the upstream injectors 7.

As seen from Fig. 5(b), the torque valleys in the torque characteristic curve S can be apparently filled by having the upstream injectors 7 appropriately performing injection. However, as understood from a comparison between the curve S and the curve T, the curve T is actually only a result of moving the curve S to a side of low rotating speed and torque is not sharply increased as compared with the curve S. It is assumed that the reason for this is that the effect produced by the upstream injectors 7 to vary pulsation waves in period exceeds the effect of increasing the air density with the result that an increase in volumetric efficiency due to an increase in air density is not adequately achieved.

In contrast, according to the embodiment, the period of pulsation waves can be controlled by means, which is separate from the upstream injectors 7. That is, pulsation waves can be adjusted in period by switching the intake passages 9 between the short state and the long state. Accordingly, the torque valleys in the torque characteristic curve can be filled notwithstanding fuel injection by the upstream injectors 7.

Hereupon, according to the embodiment, in order to have the upstream injectors 7 adequately demonstrating the effect of an increase in air density, the torque valleys in the torque characteristic curve are filled by varying the intake passage length.

A curve U in Fig. 5(b) is a torque characteristic curve of the engine according to the embodiment. According to the embodiment, torque can be sharply increased.

In addition, as shown in Fig. 5(a), the ratio of injection of the upstream injectors 7 in the embodiment is 100 % over a zone of rotating speed in a wide range. Thereby, it is possible to make a maximum use of the effect of an increase in air density, produced by the upstream injectors 7.

A curve in Fig. 5(c) indicates changes in a length of the intake passages 9 relative to engine speed. As shown in Figs. 5(a) and 5(c), according to the embodiment, when a fuel is jetted from the upstream injectors 7, the intake passages 9 are varied in length and when the intake passages 9 are varied in length, the ratio of injection of the upstream injectors 7 is made constant. Here, when the intake passage length is varied, changes are caused in torque characteristics. Accordingly, according to the embodiment, the ratio of fuel injection of the upstream injectors 7 is constant before and after a change in torque characteristics.

By the way, when an air flow rate for the combustion chambers 13c is small, the effect of an increase in engine performance, produced by the upstream injectors 7 is small. On the other hand, when an air flow rate for the combustion chambers 13c is small, a fuel jetted from the upstream injectors 7 is liable to accumulate in the intake passages 9. Hereupon, when an air flow rate for the combustion chambers 13c is small (for example, when the engine speed is less than a predetermined engine speed, or when the throttle valve 28 is small in opening degree, as in an idling state, or the like), the ratio of injection of the upstream injectors 7 is made smaller than the ratio of injection of the downstream injectors 11, and when an air flow rate for the combustion chambers 13c becomes equal to or larger than a predetermined air flow rate, the ratio of injection of the upstream injectors 7 is preferably made a predetermined value larger than the ratio of injection of the downstream injectors 11. According to the embodiment, such control is exercised.

As described above, according to the embodiment, since the upstream injectors 7, which jet a fuel on upstream sides of the upstream ends of the intake passages 9, and the control mechanism, which varies the torque characteristics so as to eliminate the torque valleys in the torque characteristic curve, are combined, it is possible to have the upstream injectors 7 demonstrating the effect of an increase in volumetric efficiency to the maximum, thus enabling a great improvement in engine performance.

According to the embodiment, the passage length varying mechanism 40, which varies a length of the intake passages 9, is used as a control mechanism, which varies the torque characteristics. The torque characteristics vary according to changes in intake passage length and also according to fuel injection from the upstream injectors 7. However, that rate, at which the torque characteristics vary due to changes in intake passage length, is larger than that rate, at which the torque characteristics vary due to fuel injection from the upstream injectors 7. Accordingly, it is possible according to the embodiment to effectively restrict the torque valleys.

The passage length varying mechanism 40 has the motor 33 moving the cylinders 23. Accordingly, it is possible to rapidly vary a length of the intake passages 9 to rapidly vary the torque characteristics.

Also, according to the embodiment, the cylinders 23 are formed from aluminum to be made lightweight. Therefore, it is possible to readily and rapidly vary the intake passage length. However, a material for the cylinders 23 is not limited to aluminum. Also, the cylinders 23 can be of course formed from a material having a large specific gravity.

Also, according to the embodiment, the cylinders 23 are moved in the second funnels 25 whereby the first funnels 24 and the second funnels 25 made contiguous or discontiguous to each other, thus varying the intake passage length. Therefore, the intake passage length varies in large degree. Accordingly, it is possible to greatly vary the engine in torque characteristics.

Also, according to the embodiment, the torque characteristics are controlled on a side of an intake system of the engine. That is, a phase of pressure waves generated in the intake passages 9 and the timing of intake of the combustion chambers 13c are made in synchronism with each other by varying the intake passage length. Accordingly, it is possible to further directly restrict generation of the torque valleys attributable to fuel injection from the upstream injectors 7.

According to the embodiment, the upstream injectors 7 jet a fuel on upstream sides of the upstream ends of the cylinders 23 when the cylinders 23 are fitted into the first funnels 24 to put the intake passages 9 in the long state. Also, the upstream injectors 7 jet a fuel on upstream sides of the upstream ends of the cylinders 23 even when the cylinders 23 get out from the first funnels 24 and the intake passages 9 are put in the short state. Accordingly, it is possible to expedite atomization of a fuel to achieve a further increase in air density.

Also, the upstream injectors 7 jet a fuel in a manner to have the same spreading upstream of the upstream ends of the cylinders 23, so that it is possible to expedite atomization of a fuel to achieve a further increase in air density.

A part of the passage length varying mechanism 40, that is, the second funnels 25, the cylinders 23, etc. is arranged inside the intake chamber 12. Therefore, it is possible to achieve making the passage length varying mechanism 40 small in size. As a result, it is possible to produce the effect of increasing freedom in layout of the vehicle, or the like.

According to the embodiment, the upstream injectors 7 are not made ON/OFF when the intake passage length is varied. Accordingly, control in a transient state is easy.

Also, according to the embodiment, the ratio of injection of the upstream injectors 7 is constant before and after a change in intake passage length. Accordingly, control in a transient state can be further exercised.

Further, according to the embodiment, the ratio of injection of the upstream injectors 7 is constant over a zone of rotating speed in a wide range. Therefore, it is not necessary to finely control the upstream injectors 7 according to a change in rotating speed. Accordingly, this is especially preferable in a vehicle, for example, a motorcycle, or the like, which is operated in a zone of rotating speed in a wide range and in which a change in rotating speed is large. In addition, "motorcycle" referred to in the specification of the present application includes a scooter, etc. in addition to a so-called motorbike.

In addition, the engine in the embodiment comprises the upstream injectors 7 and the downstream injectors 11 and is a so-called twin-injector type engine. However, the engine according to the invention may comprise only the upstream injectors 7.

In the embodiment, the upstream injectors 7 are arranged inside the air cleaner 5. However, the upstream injectors 7 may be arranged outside the air cleaner 5 as far as a fuel is jetted inside the intake chamber 12.

A control device that controls the upstream injectors 7 and the downstream injectors 11 may be the same as, or different from a control device that controls the passage length varying mechanism 40.

The control mechanism that varies the torque characteristic curve so as to restrict the torque valleys is not limited to the passage length varying mechanism 40 in the embodiment. Subsequently, an explanation will be given to a further embodiment, in which other control mechanism than the passage length varying mechanism 40 is provided.

### (Second embodiment)

According to the first embodiment, an intake passage length is varied by the motor 33. In contrast, according to the second embodiment, an intake passage length is varied by a cylinder that operates under a negative intake pressure.

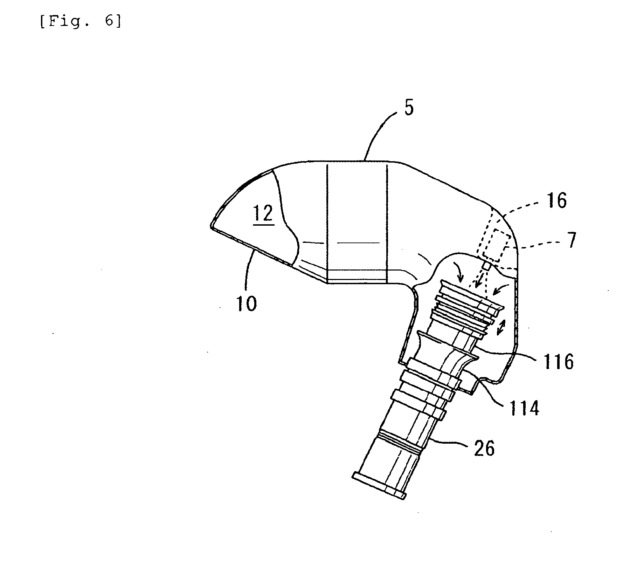

As shown in Fig. 6, also in the embodiment, a separate chamber 16 compartmented from an intake chamber 12 is formed inside an air cleaner 5 and upstream injectors 7 are arranged in the separate chamber 16.

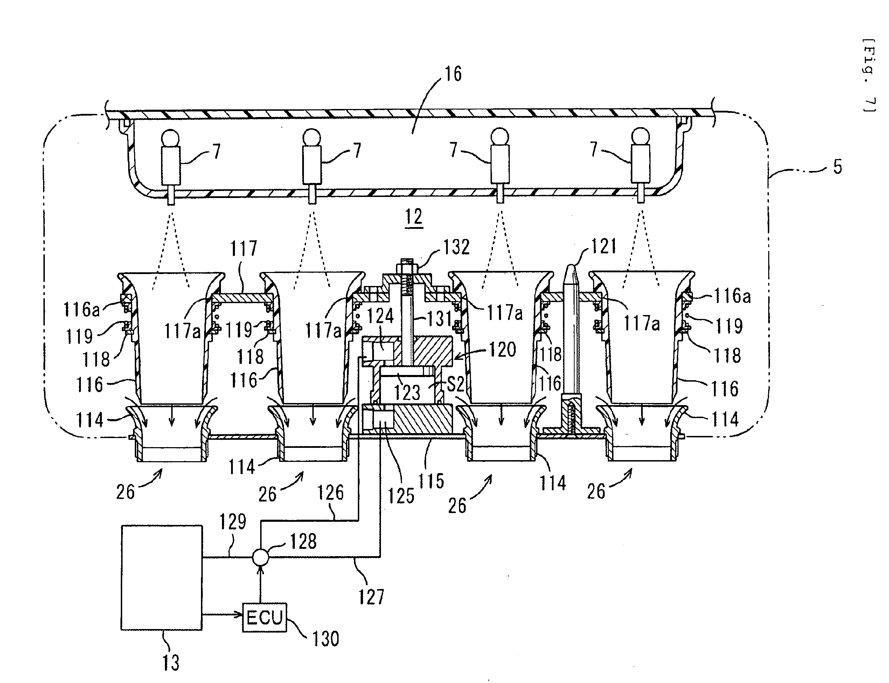

As shown in Fig. 7, first funnels 114 are connected to upstream ends of throttle bodies 26. The first four funnels 114 aligned in a vehicle breadth direction are fixed to a common stationary plate 115. Second funnels 116 are arranged on opened sides of the first funnels 114 to be able to contact with and separate from the first funnels 114. The four second funnels 116 aligned in the vehicle breadth direction are supported integrally by a movable plate 117.

The movable plate 117 is formed with circular holes 117a, which permit the second funnels 116 to be inserted therethrough. The second funnels 116 are fitted slidably into the circular holes 117a. Stoppers 118 are fixed to outer peripheral surfaces of the second funnels 116, and springs 119 are arranged between the stoppers 118 and the movable plate 117. Thereby, the second funnels 116 are constantly biased toward the first funnels 114 (downward in the figure) by the springs 119.

Steps 116a are formed on the outer peripheral surfaces of the second funnels 116. As shown in Fig. 7, when the second funnels 116 are away from the first funnels 114, the second funnels 116 are stationary in positions, in which the steps 116a abut against the movable plate 117. Accordingly, in a state shown in Fig. 7, the second funnels 116 can be moved integrally together with the movable plate 117.

A cylinder 120 as an actuator is mounted to a central portion of the stationary plate 115. A guide bar 121 extending vertically from the stationary plate 115 is mounted to one end of the stationary plate 115. The guide bar 121 extends slidably through a circular hole of the movable plate 117.

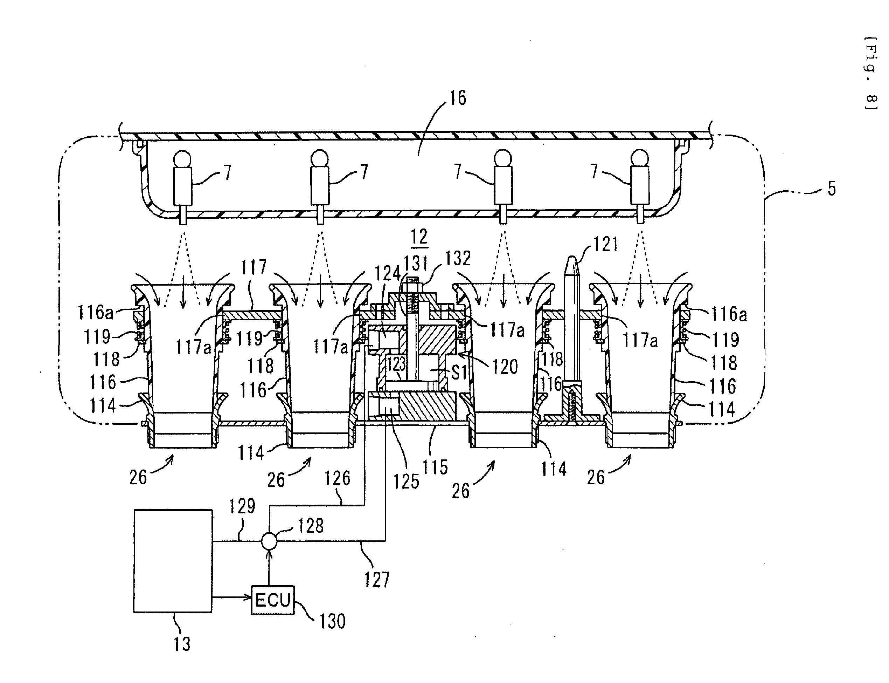

A piston 123 is fitted slidably in parallel to an axial direction of the second funnels 116 inside a body 122 of the cylinder 120. A chambers S1 (see Fig. 8) and a chamber S2, which are compartmented by the piston 123, are formed inside the cylinder body 122. Ports 124, 125 opened to the chambers S1, S2 are formed in the cylinder body 122. The ports 124, 125, respectively, are connected to a solenoid type switching valve 128 through pipes 126, 127. The switching valve 128 is connected to an intake system of the engine body 13 through a pipe 129.

A rod 131 is extended upward from the piston 123 of the cylinder 120. A central portion of the movable plate 117 is fixed to an end of the rod 131 by a nut 132.

When a controller 130 switches the switching valve 128 to a side of the pipe 127, negative intake pressure generated in the engine body 13 is conducted to the chamber S2 in the cylinder 120 through pipes 129, 127 and the port 125. As a result, the piston 123 is drawn by the negative intake pressure to descend as shown in Fig. 8 to move the movable plate 117 toward the first funnels 114 through the rod 131. When the movable plate 117 is moved in this manner, the second funnels 116 are also moved in the same direction to abut against the opened portions of the first funnels 114, so that the first funnels 114 and the second funnels 116 are made contiguous to each other. That is, intake passages are put in the long state.

On the other hand, when the controller 130 switches the switching valve 128 to a side of the pipe 126, negative intake pressure generated in the engine body 13 is conducted to the chamber S1 in the cylinder 120 through the pipes 129, 126 and the port 124. Then the piston 123 is drawn by the negative intake pressure to ascend as shown in Fig. 7 to lift the movable plate 117 together with the second funnels 116 through the rod 131. As a result, the second funnels 116 separate from the first funnels 114, so that the intake passages are put in the short state.

As described above, it is possible in the second embodiment to vary the intake passage length to restrict the torque valleys in the torque characteristic curve. Accordingly, it is possible to produce the same effect as that in the first embodiment.

Also, according to the embodiment, since the cylinder 120, which operates under the negative intake pressure generated in the engine body 13, is adopted as an actuator to drive the movable plate 117, moving motions of the second funnels 116 are high in response. Accordingly, it is possible to rapidly vary the torque characteristics.

In addition, other constructions or motions related to the passage length varying mechanism are described in the publication of Patent No. 2779198. The embodiment covers all the contents disclosed in the publication. However, the embodiment suffices to have the same function as that of the embodiment, etc. disclosed in the publication, and is not limited to the latter.

### (Third embodiment)

The first and second embodiments vary the intake passage length to vary the torque characteristics. In contrast, a third embodiment comprises a valve operating device and varies timing of opening and closing of, or time of opening and closing of intake valves or exhaust valves to vary the torque characteristic curve.

Subsequently, an explanation will be given to the embodiment, in which a valve operating device is provided in an intake system. However, it is of course possible to provide a valve operating device in an exhaust system.

Also, while illustration is omitted, any throttle valve is not provided in an intake passage. That is, the embodiment comprises a so-called non-throttle valve type engine.

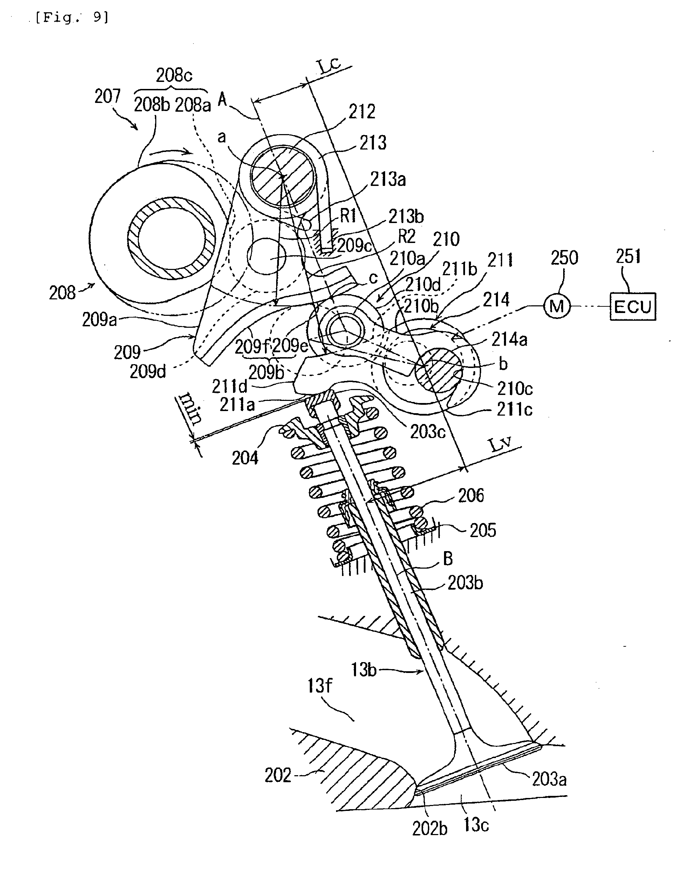

As shown in Fig. 9, an intake valve 13b comprises a valve shaft 203b, a valve head 203a mounted to a tip end of the valve shaft 203b, and a retainer 204 fixed to a root portion (an upper end) of the valve shaft 203b. A valve spring 206 is arranged between the retainer 204 and a spring seat 205 of a cylinder head 202. Thereby, the intake valve 13b is constantly biased in a closing direction by the valve spring 206.

A valve operating device 207 is arranged above the intake valve 13b. The valve operating device 207 comprises a swing member 209, an intermediate rocker 210, and a rocker arm 211. The valve operating device 207 causes an intake cam shaft 208 to swing the swing member 209, and causes the swing member 209 to swing the rocker arm 211 through the intermediate rocker 210, and the intake valve 13b is axially retreated by swinging of the rocker arm 211, thus opening and closing an intake opening 202b.

The intake cam shaft 208 is formed with a cam nose 208c. The cam nose 208c comprises a base circular portion 208a having a constant outside diameter, and a lift portion 208b having a predetermined cam profile.

The swing member 209 comprises a pair of swing arm portions 209a arranged in parallel to the intake cam shaft 208 and supported on a swing shaft 212 to be able to swing, swing cam surfaces 209b formed so as to connect tip ends (lower ends) of the swing arm portions 209a together, a roller shaft 209c arranged midway the swing arm portions 209a in parallel to the swing shaft 212 and extending through the swing arm portions 209a, and a swing roller 209d supported rotatably on the roller shaft 209c. In addition, the swing roller 209d contacts with the cam nose 208c at all times.

Also, the swing shaft 212 extends through a base (an upper end) of the swing arm portions 209a to be able to swing. A balance spring 213 composed of a coil spring is mounted to the swing shaft 212. One end 213a of the balance spring 213 is latched on the swing arm portions 209a and the other end 213b is latched on the cylinder head 202. The balance spring 213 biases the swing member 209 so that the swing roller 209d abuts against the cam nose 208c, whereby application of a weight of the swing member 209 on the valve spring 206 is avoided.

The swing cam surfaces 209b comprise a curved surface, which a base circular portion 209e and a lift portion 209f are made contiguous to each other to define. The base circular portion 209e is arcuate about a swing center a, which is an axis of the swing shaft 212, to have a radius R1. Therefore, while the base circular portions 209e contact with the swing roller 209d, the intake valve 13b is present in a fully closed position and not lifted even when the swing member 209 is increased in swing angle.

On the other hand, the lift portions 209f greatly lift the intake valve 13b as a portion near a top of the lift portion 208b pushes the swing roller 209d, that is, the swing member 209 is increased in swing angle. According to the embodiment, the lift portion 208b comprises a ramp section, in which speed is constant, an acceleration section, in which speed is varied, and a lift section, in which speed is substantially constant.

The rocker arm 211 comprises a cylindrical-shaped base 211 c and an arm portion 211 d extending forward (toward the intake valve) from the base 211 c. The base 211 c is supported on a rocker shaft 214, which is arranged in parallel to the intake cam shaft 208, to able to swing. A valve pushing surface 211 a is formed on a lower portion of a tip end of the arm portion 211 d. The valve pushing surface 211 a pushes a shim 203c mounted to an upper end of the valve shaft 203b. Also, a rocker pushing surface 211 b is formed on an upper edge of the arm portion 211 d. The rocker pushing surface 211 b contacts with a rocker pin 210a of the intermediate rocker 210 to be pushed by the rocker pin 210a. The rocker pushing surface 211 b is formed to have an arc of a radius R2 about a swing center a of the swing member 209 in a fully closed position of the valve.

The rocker shaft 214 is provided with a motor 250. A controller 251 controls the motor 250 whereby a rotationally angular position of the rocker shaft 214 is freely adjusted. An eccentric pin portion 214a is provided midway the rocker shaft 214 to be made radially outwardly eccentric from an axis b. A recess 210c is formed on a base end of an intermediate arm portion 210b of the intermediate rocker 210, the recess 210c being latched on the eccentric pin portion 214a.

The intermediate rocker 210 comprises the intermediate arm portion 210b and the rocker pin 210a connected to a tip end of the intermediate arm portion 210b to extend in a direction along the cam shaft. A rocker roller 210d is supported rotatably on the rocker pin 210a. The rocker roller 210d contacts with the swing cam surfaces 209b of the swing member 209, and the rocker pin 210a contacts with the rocker pushing surface 211 b of the rocker arm 211.

Here, a straight line A connects between the swing center a of the swing member 209 and a point of contact c of the swing cam surfaces 209b and the intermediate rocker roller 210d. A rocker lever ratio is represented by Lv/Lc where Lc indicates a distance from the straight line A to a swing center b of the rocker arm 211 and Lv indicates a distance from a valve axis B to the swing center b of the rocker arm 211. The shorter a period of time of valve opening, the larger the lever ratio.

When the rotationally angular position of the rocker shaft 214 is varied by the motor 250, the intermediate rocker roller 210d and the intermediate rocker pin 210a, respectively, are moved along the swing cam surfaces 209b and the rocker pushing surface 211 b to make an opening angle and a lift of the valve vary continuously.

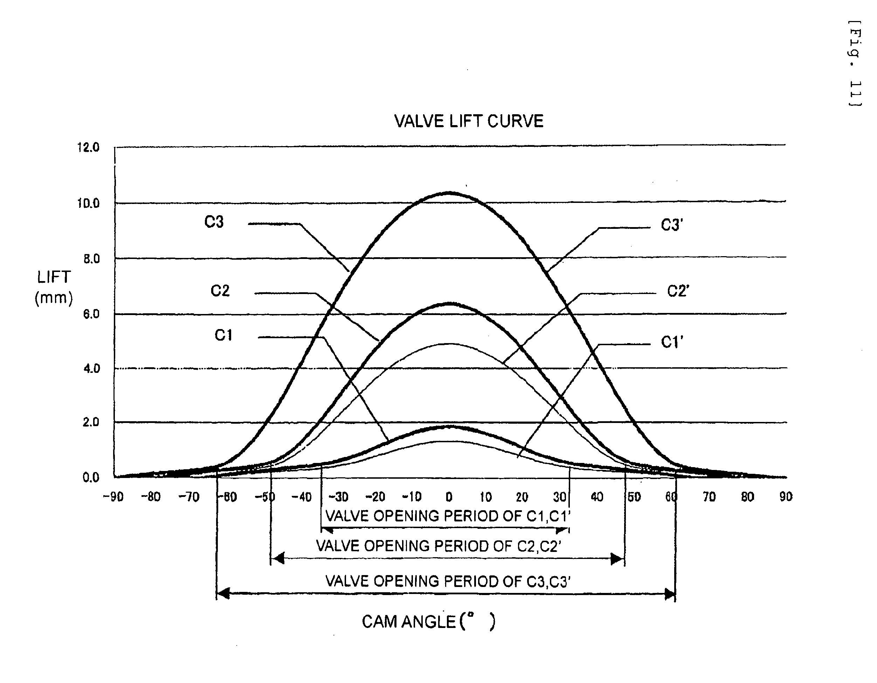

Specifically, in a state of small opening degree, in which the period of time of valve opening is minimum and a maximum lift is minimum as shown in, for example, Fig. 9, the rocker shaft 214 is rotationally driven so that the eccentric pin portion 214a is made most distant from the swing cam surfaces 209b. Thereby, a position of the point of contact c of the intermediate rocker roller 210d and the swing cam surfaces 209b becomes farthest from the lift portions 209f. Also, since the point of contact c becomes closest to the swing center b of the rocker arm 211 and Lc is decreased, the rocker lever ratio becomes maximum. Therefore, a lift curve makes a curve C1 in Fig. 11.

On the other hand, in a state of large opening degree, in which the period of time of valve opening is maximum and a maximum lift is maximum, the rocker shaft 214 is rotationally driven so that the eccentric pin portion 214a becomes closest to the swing cam surfaces 209b. Thereby, a position of the point of contact c' of the intermediate rocker roller 210d and the swing cam surfaces 209b becomes closest to the lift portions 209f. Since the point of contact c' separates from the swing center b of the rocker arm 211 and Lc becomes maximum, the rocker lever ratio becomes minimum. Therefore, the lift curve makes a curve C3 in Fig. 11. As shift is made from the state of small opening degree to the state of large opening degree, the lift curve varies continuously from the curve C1 to the curve C3.

Here, curves C1' to C3' in Fig. 11 indicate lift curves of a comparative example in the case where the rocker lever ratio is constant. That is, a device of the comparative example is set so as to have the same characteristics as that of the lift curve in the state of large opening degree in the embodiment, and a comparison is made for changes in lift in the case where shift is made therefrom to the state of small opening degree. As apparent from the figure, with the device of the comparative example, in which the rocker lever ratio is constant, lift shifts from the curve C3' to the curve C1' via the curve C2' to fall greatly. In contrast, with the embodiment, in which the rocker lever ratio is set to be increased toward the state of small opening degree, lift shifts from the curve C3 to the curve C1 via the curve C2 to be restricted in falling. In this manner, it is found that falling of lift when a comparison is made at the same opening degree is smaller in the embodiment than in the device of the comparative example.

According to the embodiment, by varying timing of opening and closing of and a period of time of opening and closing of the intake valve 13b, it is possible to control timing of generation of and a period of pulsation waves in the intake passage to vary the torque characteristics of the engine. Accordingly, it is possible to produce the same effect as that in the first embodiment.

In addition, according to the embodiment, the valve operating device 207 is provided on an intake side to vary timing of opening and closing of and a period of time of opening and closing of the intake valve 13b. However, the valve operating device 207 may be provided on an exhaust side to vary timing of opening and closing of and a period of time of opening and closing of the exhaust valve. Even in this case, it is possible to vary the torque characteristics so as to restrict the torque valleys in the torque characteristic curve.

The valve operating device 207 serves to vary both timing of opening and closing of and a period of time of opening and closing of the valve. However, the valve operating device 207 may vary either of timing of opening and closing of and a period of time of opening and closing of the valve.

The valve operating device may be of an electromagnetic valve type or a hydraulic valve type. The valve operating device is not limited to such specific type.

### (Fourth embodiment)

A fourth embodiment comprises a mechanism that varies a length of an exhaust passage, as a control mechanism that varies the torque characteristics. The control mechanism according to the embodiment exercises control to make a phase of pressure waves generated in the exhaust passage and timing of exhaust of a combustion chamber in synchronism with each other.

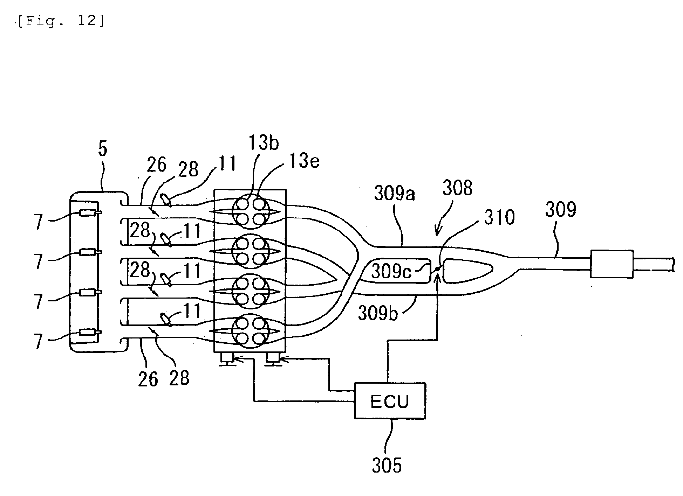

As shown schematically in Fig. 12, the engine according to the embodiment comprises a 4-cylinder four valve engine including two intake valves 13b and two exhaust valves 13e every cylinder.

An exhaust device 308 of the engine comprises a right manifold 309a that combines exhaust ports of cylinders on a left end and a right end, a left manifold 309b that combines exhaust ports of two central cylinders, and a junction pipe 309 that combines the manifolds 309a, 309b into one.

Intermediate portions of the right manifold 309a and the left manifold 309b are communicated to each other by a communicating pipe 309c. An exhaust control valve 310 is arranged on the communicating pipe 309c to open and close the communicating pipe 309c. A substantially exhaust passage length of the exhaust device 308 is varied by opening and closing of the exhaust control valve 310. That is, the passage length of the exhaust passage is put in the long state when the exhaust control valve 310 is closed, and put in the short state when the exhaust control valve 310 is opened. In addition, the exhaust control valve 310 is controlled by a controller 305.

The exhaust passage length is varied in this manner whereby pulsation waves generated in the exhaust passage are varied in period. Accordingly, the exhaust passage length is caused to vary, thereby enabling varying the torque characteristics. The same effect as that in the first embodiment can be also produced in the embodiment.

A mechanism that varies an exhaust passage length is not limited to the mechanism. It is of course possible to use other mechanisms as a control mechanism that varies the torque characteristics.

### (Fifth embodiment)

The fifth embodiment comprises, as a control mechanism that varies the torque characteristics, a reflecting plate provided in an exhaust passage to reflect pressure waves. That is, according to the embodiment, a part of pressure waves generated in the exhaust passage is reflected by the reflecting plate, and thus pressure waves reflected at an opened end of the exhaust passage and pressure waves (reflected waves) reflected by the reflecting plate are caused to interfere with each other. The interference damps the pressure waves and varies the torque characteristics.

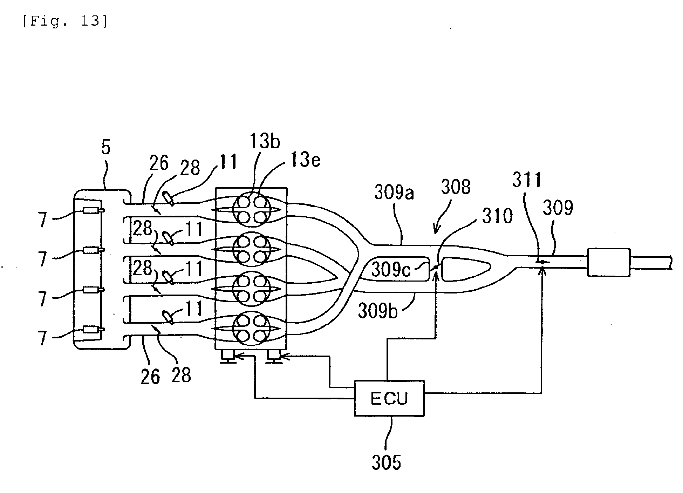

As shown in Fig. 13, the engine according to the embodiment comprises a butterfly-shaped reflecting plate 311 provided in a junction pipe (simply referred below to as exhaust pipe) 309. In addition, while an explanation is given to an example, in which the reflecting plate 311 is provided on the engine of the fourth embodiment, the reflecting plate 311 may be of course provided on an engine without the exhaust control valve 310.

The reflecting plate 311 comprises a spindle fixed to the exhaust pipe 309, and a disk supported rotatably on the spindle. The disk is supported to be concentric with an inner surface of an exhaust pipe 311. When the spindle is rotated, the disk rotates about the spindle, so that the reflecting plate 311 is varied in cross sectional area. An area of the disk is set to about a half of the cross sectional area of the exhaust pipe 311, and when the reflecting plate 311 is closed by the spindle, a half of the cross sectional area of the exhaust pipe 309 is closed and the reflecting surface becomes maximum.

When the reflecting plate 311 is minimum in opening degree, a part of pressure waves generated at exhaust ports at the start of exhaust stroke (when exhaust valves 13e are opened) is reflected by the reflecting plate 311 and the remainder passes around the reflecting plate 311 to be reversed at a downstream end of the exhaust pipe 309 to advance in an opposite direction. Here, pressure waves reflected by the reflecting plate 311 and pressure waves reflected at the opened end are the same in pressure waveform and opposite to each other only in phase. Therefore, the both pressure waves cancel each other and damp. That is, according to the embodiment, pulsation of exhaust pressure are divided into two parts at the reflecting plate 311 and at the opened end to be reflected and interfere mutually to thereby damp.

Accordingly, according to the embodiment, it is possible to damp positive pressure waves acting at the exhaust ports at the end of exhaust stroke (when the intake valves 13b begin to open) to lessen influences thereof, so that it is possible to prevent suction of an intake air from being obstructed. Thereby, it is possible to vary the torque characteristics so as to restrict the torque valleys.

### (Other embodiments)

A control mechanism that makes use of pulsation waves generated in an intake passage or an exhaust passage to vary the torque characteristics is not limited to the mechanisms of the respective embodiments. For example, the control mechanism may be one that varies an intake passage or an exhaust passage in flow passage area. It is possible to make use of an optional mechanism that varies an intake passage or an exhaust passage in flow passage area, as the control mechanism.

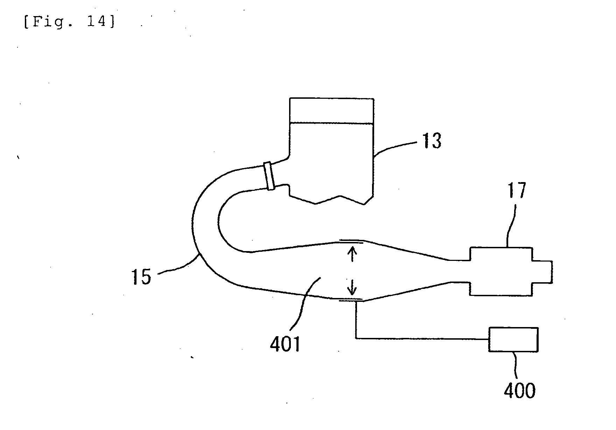

Fig. 14 is a view schematically showing a mechanism that varies an exhaust passage in flow passage area. With the mechanism, an expansion passage 401 expanding and contracting radially is formed midway an exhaust passage 15. A drive mechanism 400 expands and contracts the expansion passage 401.

In this manner, the torque characteristics can be varied also by varying the flow passage area. Accordingly, it is possible to produce the same effect as that in the first embodiment.

Also, since the period of pulsation waves varies according to an air temperature, the control mechanism may be one that varies an intake passage in temperature or an exhaust passage in temperature. Also, since the period of pulsation waves varies according to an air pressure, the control mechanism may be one that varies an intake passage in pressure or an exhaust passage in pressure.

As described above, the teaching of the present embodiments is useful in an engine and a vehicle provided with the same.

The description above discloses (amongst others) an embodiment of an engine comprising an engine body having a combustion chamber, an intake chamber having an introduction port, through which an air is introduced, an intake passage, which includes an opening opened into the intake chamber and through which the air in the intake chamber is led from the opening to the combustion chamber, an injector that jets a fuel between the introduction port and the opening, an exhaust passage, through which combustion gases are led from the combustion chamber, and a control mechanism that makes use of pressure waves generated in at least one of the intake passage and the exhaust passage to vary torque characteristics so as to eliminate valleys in a torque characteristic curve indicating a change in torque relative to a change in engine speed.

Preferably, the control mechanism varies the torque characteristics at a larger rate than that, at which the torque characteristics varies due to fuel injection of the injector.

The description further discloses an embodiment of an engine comprising an engine body having a combustion chamber, an intake chamber having an introduction port, through which an air is introduced, an intake passage, which includes an opening opened into the intake chamber and through which the air in the intake chamber is led from the opening to the combustion chamber, an injector that jets a fuel between the introduction port and the opening, and a control mechanism that exercises control to synchronize phase of pressure waves generated in the intake passage and timing of intake of the combustion chamber with each other.

The description above further provides an embodiment of the engine comprising an engine body having a combustion chamber, an intake chamber having an introduction port, through which an air is introduced, an intake passage, which includes an opening opened into the intake chamber and through which the air in the intake chamber is led from the opening to the combustion chamber, an injector that jets a fuel between the introduction port and the opening, and a control mechanism that exercises control to synchronize phase of pressure waves generated in the exhaust passage and timing of exhaust of the combustion chamber with each other.

With the engine according to the above embodiments, an air flowing through the intake passage is evaporated and cooled by a fuel, which is jetted from the injector, over a relatively long period of time. Therefore, the air density is increased and the volumetric efficiency of the engine is enhanced. In addition, with the engine, the control mechanism adjusts the torque characteristics so as to eliminate valleys in a torque characteristic curve. Therefore, although injection of a fuel from the injector varies the period of pulsation waves in the intake passage, a decrease in torque is restricted. Accordingly, it is possible to demonstrate the effect of an increase in volumetric efficiency, produced by the injector, to the maximum, and so a great improvement in engine performance is achieved.

Accordingly, since the effect of an increase in volumetric efficiency, produced by the injector, can be demonstrated to the maximum, it is possible to greatly improve the engine performance.

Preferably, the control mechanism comprises a passage length varying mechanism that varies a length of the intake passage. Therein, the passage length varying mechanism may comprise a cylindrical-shaped body having an upstream-side opening and a downstream-side opening, and a drive mechanism that relatively moves the cylindrical-shaped body and the intake passage in a direction along the passage, and the injector may jet a fuel on an upstream side of the upstream-side opening disposed when the cylindrical-shaped body is moved to a downstream-most side. Therein, the injector further may jet a fuel on an upstream side of the upstream-side opening disposed when the cylindrical-shaped body is moved to an upstream-most side. Therein, the intake passage may further be fixed to the engine body, and the drive mechanism may move the cylindrical-shaped body. Additionally, the injector may jet a fuel so as to have the same spreading on the upstream side of the upstream-side opening.

According to a further embodiment disclosed above, the passage length varying mechanism comprises a cylindrical-shaped body having an upstream-side opening and a downstream-side opening, and a drive mechanism that relatively moves the cylindrical-shaped body and the intake passage in a direction along the passage, and the drive mechanism relatively moves the cylindrical-shaped body and the intake passage between a first state, in which the cylindrical-shaped body and the intake passage contact with each other, and a second state, in which the cylindrical-shaped body and the intake passage separate from each other.

Beneficially, an intake port is formed on the combustion chamber, and the engine further comprises an intake valve that opens and closes the intake port, and a valve opening and closing mechanism that drives the intake valve, and wherein the control mechanism comprises an intake timing varying mechanism that varies timing of opening and closing of and a period of timing of opening of the intake valve caused by the valve opening and closing mechanism.

Further, beneficially, the control mechanism comprises a passage length varying mechanism that varies a length of the exhaust passage.

Still further, beneficially an exhaust port is formed on the combustion chamber, and the engine further comprises an exhaust valve that opens and closes the exhaust port, and a valve opening and closing mechanism that drives the exhaust valve, and wherein the control mechanism comprises an exhaust timing varying mechanism that varies timing of opening and closing of and a period of timing of opening of the exhaust valve caused by the valve opening and closing mechanism.

Yet further, beneficially the engine further comprises a reflecting member that reflects pressure waves, and wherein the control mechanism comprises a reflection area varying mechanism that varies an area of reflection by the reflecting member.

Additionally, the engine may further comprise a downstream injector that jets a fuel between the throttle valve and the combustion chamber, and an injection control device that controls the injector and the downstream injector, and wherein the injection control device continues fuel injection from the injector before and after the control mechanism exercises the control.

Likewise, the engine may further comprise a downstream injector that jets a fuel between the throttle valve and the combustion chamber, and an injection control device that controls the injector and the downstream injector, and wherein the injection control device maintains a ratio of injection of the injector and the downstream injector before and after the control mechanism exercises the control.

Moreover, the engine may further comprise a downstream injector that jets a fuel between the throttle valve and the combustion chamber, and an injection control device that controls the injector and the downstream injector, and wherein the injection control device makes a ratio of injection of the injector smaller than a ratio of injection of the downstream injector when a flow rate of an air to the combustion chamber is less than a predetermined amount, and makes a ratio of injection of the injector a constant ratio of injection, which is smaller than a ratio of injection of the downstream injector.

Beneficially, at least a part of the control mechanism is arranged in the intake chamber.

Further, beneficially a vehicle comprises the engine according to any one of the above embodiments.

In order to greatly improve the engine performance by demonstrating the effect of an increase in volumetric efficiency, produced by an injector, to the maximum, the description discloses a preferred embodiment according to which there are provided in an air cleaner 5 first funnels 24 connected to upstream ends of throttle bodies 26 and opened to an intake chamber 12, second funnels 25 arranged coaxial with the first funnels 24 and separated from the first funnels 24, and cylinders 23 inserted inside the second funnels 25. An engine comprises a passage length varying mechanism 40 that moves the cylinders 23 to thereby vary intake passages 9 in length. Also, the engine comprises upstream injectors 7 that jet a fuel from upstream sides of the cylinders 23.

The description above still further discloses an embodiment of a fuel feed device which comprises an intake chamber having an introduction port, through which an air is introduced, an intake passage, which includes an opening opened into the intake chamber and through which an air in the intake chamber is led from the opening to an engine, an injector that jets a fuel toward the opening from between the introduction port and the opening in the intake chamber, and a tubular jet protection member arranged between the injector and the opening in the intake chamber to permit a fuel jetted from the injector to pass therethrough toward the opening.

With the fuel feed device, a jet flow from the injector is surrounded by the tubular jet protection member. Therefore, blowing-over of a fuel is restricted by the tubular member. Accordingly, even when the injector is not made close to the opening of the intake chamber, it is possible to restrict blowing-over. Therefore, with the fuel feed device, it is possible to expedite atomization of a fuel and prevent blowing-over of a fuel in a compatible manner.

According to this embodiment, it is possible to restrict blowing-over of a fuel while achieving a sufficient improvement in engine performance.

## Claims

1. Engine comprising
an introduction port (10) through which air is introduced into an intake chamber (12),
an intake passage (9), which includes an opening opened into the intake chamber (12) and through which the air in the intake chamber (12) is led from the opening to a combustion chamber (13c),
an injector (7) that jets fuel between the introduction port (10) and the opening, an exhaust passage (15), through which combustion gases are led from the combustion chamber (13c), and
a control mechanism configured to vary torque characteristics of the engine, **characterized in that** the control mechanism comprises a passage length varying mechanism (40) that varies a length of the intake passage (9) for making use of pressure waves generated in at least one of the intake passage (9) and the exhaust passage (15) so as to eliminate valleys in a torque characteristic curve indicating a change in torque relative to a change in engine speed, wherein the passage length varying mechanism (40) comprises a cylindrical-shaped body (23, 116) having an upstream-side opening and a downstream-side opening, and a drive mechanism (30-35;120,S1,123-128) that relatively moves the cylindrical-shaped body (23, 116) and the intake passage (9) in a direction along the passage between a first state, in which the cylindrical-shaped body (23, 116) and the intake passage (9) contact with each other, and a second state, in which the cylindrical-shaped body (23, 116) and the intake passage (9) separate from each other.

2. Engine according to claim 1, **characterized in that** the control mechanism varies the torque characteristics at a larger rate than that, at which the torque characteristics varies due to fuel injection of the injector (7).

3. Engine according to claim 1 or 2, **characterized in that** the control mechanism exercises control to synchronize phase of pressure waves generated in the intake passage (9) and timing of intake of the combustion chamber (13c) with each other.

4. Engine according to one of the claims 1 to 3, **characterized in that** the control mechanism exercises control to synchronize phase of pressure waves generated in the exhaust passage (15) and timing of exhaust of the combustion chamber (13c) with each other.

5. Engine according to at least one of the claims 1 to 4, **characterized in that** the injector (7) jets a fuel on an upstream side of the upstream-side opening disposed when the cylindrical-shaped body (23, 116) is moved to an upstream-most side.

6. Engine according to at least one of the claims 1 to 5, **characterized in that** the intake passage (9) is fixed to the engine body (23, 116), and the drive mechanism (30-35;120,S1,123-128) moves the cylindrical-shaped body (23, 116).

7. Engine according to at least one of the claims 1 to 6, **characterized in that** the injector (7) jets a fuel so as to have the same spreading on the upstream side of the upstream-side opening.

8. Engine according to one of the claims 1 to 7, **characterized in that** an intake port (13f) is formed on the combustion chamber (13c), and
further comprising an intake valve (13b) that opens and closes the intake port (13f), and a valve opening and closing mechanism (13a) that drives the intake valve (13b),
and wherein the control mechanism comprises an intake timing varying mechanism that varies timing of opening and closing of and a period of timing of opening of the intake valve (13b) caused by the valve opening and closing mechanism (13a).

9. Engine according to one of the claims 1 to 8, **characterized in that** the control mechanism comprises a passage length varying mechanism that varies a length of the exhaust passage (15).

10. Engine according to one of the claims 1 to 9, **characterized in that** an exhaust port is formed on the combustion chamber (13c), and
further comprising an exhaust valve (13e) that opens and closes the exhaust port, and a valve opening and closing mechanism (13d) that drives the exhaust valve (13e), and wherein the control mechanism comprises an exhaust timing varying mechanism that varies timing of opening and closing of and a period of timing of opening of the exhaust valve (13e) caused by the valve opening and closing mechanism (13d).

11. Engine according to one of the claims 1 to 10, **characterized by** a reflecting member that reflects pressure waves, and wherein the control mechanism comprises a reflection area varying mechanism that varies an area of reflection by the reflecting member.

12. Engine according to one of the claims 1 to 11, **characterized by** a downstream injector (11) that jets a fuel between the throttle valve and the combustion chamber (13c), and an injection control device that controls the injector (7) and the downstream injector (11), and wherein the injection control device continues fuel injection from the injector (7) before and after the control mechanism exercises the control.

13. Engine according to one of the claims 1 to 11, **characterized by** a downstream injector (11) that jets a fuel between the throttle valve and the combustion chamber (13c), and an injection control device that controls the injector (7) and the downstream injector (11), and wherein the injection control device maintains a ratio of injection of the injector (7) and the downstream injector (11) before and after the control mechanism exercises the control.

14. Engine according to one of the claims 1 to 11, **characterized by** a downstream injector (11) that jets a fuel between the throttle valve and the combustion chamber (13c), and an injection control device that controls the injector (7) and the downstream injector (11), and wherein the injection control device makes a ratio of injection of the injector (7) smaller than a ratio of injection of the downstream injector (11) when a flow rate of an air to the combustion chamber (13c) is less than a predetermined amount, and makes a ratio of injection of the injector (7) a constant ratio of injection, which is smaller than a ratio of injection of the downstream injector (11).

15. Engine according to one of the claims 1 to 14, **characterized in that** at least a part of the control mechanism is arranged in the intake chamber (12).

16. Vehicle comprising the engine according to one of claims 1 tol5.

## Patentansprüche

1. Brennkraftmaschine, aufweisend
eine Einleitungsöffnung (10), durch die Luft in eine Einlasskammer (12) eingeleitet wird,
einen Einlasskanal (9), der eine Öffnung, geöffnet in die Einlasskammer (12), enthält und durch die die Luft in die Einlasskammer (12) von der Öffnung zu einer Brennkammer (13c) geführt wird,
einen Einspritzer (7), der Kraftstoff zwischen die Einleitungsöffnung (10) und die Öffnung einspritzt,
einen Auslasskanal (15), durch die Verbrennungsgase aus der Brennkammer (13c) geführt werden, und
eine Steuerungsvorrichtung, konfiguriert die Drehmomentcharakteristik der Brennkraftmaschine zu verändern,
**dadurch gekennzeichnet, dass** die Steuerungsvorrichtung eine Kanallängenveränderungsvorrichtung (40) aufweist, die eine Länge des Einlasskanals (9) variiert, um Gebrauch von Druckwellen, erzeugt in zumindest einem von Einlasskanal (9) und Auslasskanal (15), zu machen, um Täler in einer Drehmomentcharakteristikkurve zu eliminieren, die eine Veränderung im Drehmoment in Bezug zu einer Veränderung in der Motordrehzahl anzeigen, wobei die Kanallängenveränderungsvorrichtung (40) einen zylindrisch geformten Körper (23, 116) aufweist, der eine stromaufseitige Öffnung und eins stromabseitige Öffnung und eine Antriebsvorrichtung (30-35; 120, S1, 123-126) hat, die den zylindrisch geformten Körper (23, 116) und den Einlasskanal (9) relativ zueinander bewegt in eine Richtung entlang des Kanals zwischen einem ersten Zustand, in dem sich der zylindrisch geformte Körper (23, 116) und der Einlasskanal (9) miteinander berühren, und einem zweiten Zustand, in dem der zylindrisch geformte Körper (23, 116) und der Einlasskanal (9) voneinander getrennt sind.

2. Brennkraftmaschine nach Anspruch 1, **dadurch gekennzeichnet, dass** die Steuerungsvorrichtung die Drehmomentcharakteristik in einem größeren Maße verändert, als dasjenige, mit dem die Drehmomentcharakteristik infolge der Kraftstoffeinspritzung des Einspritzers (7) variiert.

3. Brennkraftmaschine nach Anspruch 1 oder 2, **dadurch gekennzeichnet, dass** die Steuerungsvorrichtung eine Steuerung ausübt, um die Phase der Druckwellen, erzeugt in dem Einlasskanal (9), und den Einlasszeitpunkt der Brennkammer (13c) miteinander zu synchronisieren.

4. Brennkraftmaschine nach einem der Ansprüche 1 bis 3, **dadurch gekennzeichnet, dass** die Steuerungsvorrichtung eine Steuerung ausübt, um die Phase der Druckwellen, erzeugt in dem Auslasskanal (15), und den Auslasszeitpunkt der Brennkammer (13c) miteinander zu synchronisieren.

5. Brennkraftmaschine nach zumindest einem der Ansprüche 1 bis 4, **dadurch gekennzeichnet, dass** der Einspritzer (7) einen Kraftstoff auf eine stromaufwärtige Seite der stromaufseitigen Öffnung einspritzt, vorgesehen, wenn der zylindrisch geformte Körper (23, 116) auf eine am weitesten stromaufwärtige Seite bewegt wird.

6. Brennkraftmaschine nach zumindest einem der Ansprüche 1 bis 5, **dadurch gekennzeichnet, dass** der Einlasskanal (9) an dem Motorkörper (23, 116) befestigt ist und die Antriebsvorrichtung (30-35; 120, S1, 123-126) den zylindrisch geformten Körper (23, 116) bewegt.

7. Brennkraftmaschine nach zumindest einem der Ansprüche 1 bis 6, **dadurch gekennzeichnet, dass** der Einspritzer (7) einen Kraftstoff so einspritzt, um dieselbe Verteilung auf der stomaufwärtigen Seite der stromaufseitigen Öffnung zu haben.

8. Brennkraftmaschine nach einem der Ansprüche 1 bis 7, **dadurch gekennzeichnet, dass** die Einleitungsöffnung (13f) an der Brennkammer (13c) gebildet ist und außerdem aufweist ein Einlassventil (13b), das die Einleitungsöffnung (13f) öffnet oder schließt, und eine Ventilöffnungs- und Schließ- Vorrichtung (13a), die das Einlassventil (13b) antreibt,
und wobei die Steuerungsvorrichtung eine Einlasszeitpunkt- Veränderungsvorrichtung aufweist, die den Zeitpunkt des Öffnens und Schließens und eine Zeitdauer der Öffnung des Einlassventiles (13b), veranlasst durch die Ventilöffnungs- und Schließ- Vorrichtung (13a), variiert.

9. Brennkraftmaschine nach einem der Ansprüche 1 bis 8, **dadurch gekennzeichnet, dass** die Steuerungsvorrichtung eine Kanallängen- Veränderungsvorrichtung aufweist, die eine Länge des Auslasskanales (15) variiert.

10. Brennkraftmaschine nach einem der Ansprüche 1 bis 9, **dadurch gekennzeichnet, dass** eine Auslassöffnung an der Brennkammer (13c) gebildet ist und außerdem aufweist ein Auslassventil (13e), das die Auslassöffnung öffnet oder schließt, und eine Ventilöffnungs- und -schließvorrichtung (13d), die das Auslassventil (13e) antreibt, und wobei die Steuerungsvorrichtung einen Auslasszeitpunkt- Veränderungsvorrichtung aufweist, die den Zeitpunkt des Öffnens oder Schließens und eine Zeitdauer des Öffnens des Auslassventils (13e), veranlasst durch die Ventilöffnungs- und -schließvorrichtung (13d), verändert.

11. Brennkraftmaschine nach einem der Ansprüche 1 bis 10, **gekennzeichnet durch** ein reflektierendes Teil, das Druckwellen reflektiert, und wobei die Steuerungsvorrichtung eine Reflektionsflächen- Variationsvorrichtung aufweist, die eine Reflektionsfläche an dem reflektierende Teil verändert.

12. Brennkraftmaschine nach einem der Ansprüche 1 bis 11, **gekennzeichnet durch** einen stromabwärtigen Einspritzer (11), der einen Kraftstoff zwischen das Drosselventil und die Brennkammer (13c) einspritzt, und eine Einspritzungssteuerungsvorrichtung, die den Einspritzer (7) und den stromabwärtigen Einspritzer (11) steuert, und wobei die Einspritzungssteuerungsvorrichtung die Kraftstoffeinspritzung von dem Einspritzer (7), bevor und nachdem die Steuerungsvorrichtung die Steuerung ausübt, fortsetzt.

13. Brennkraftmaschine nach einem der Ansprüche 1 bis 11, **gekennzeichnet durch** einen stromabwärtigen Einspritzer (11), der einen Kraftstoff zwischen das Drosselventil und die Brennkammer (13c) einspritzt, und eine Einspritzungssteuerungsvorrichtung, die den Einspritzer (7) und den stromabwärtigen Einspritzer (11) steuert, und wobei die Einspritzungssteuerungsvorrichtung ein Einspritzungsverhältnis des Einspritzers (7) und des stromabwärtigen Einspritzers (11), bevor und nachdem die Steuerungsvorrichtung die Steuerung ausübt, beibehält.

14. Brennkraftmaschine nach einem der Ansprüche 1 bis 11, **gekennzeichnet durch** einen stromabwärtigen Einspritzer (11), der einen Kraftstoff zwischen das Drosselventil und die Brennkammer (13c) einspritzt, und eine Einspritzungssteuerungsvorrichtung, die den Einspritzer (7) und den stromabwärtigen Einspritzer (11) steuert, und wobei die Einspritzungssteuerungsvorrichtung einen Anteil von Einspritzung des Einspritzers (7) kleiner als einen Anteil von Einspritzung des stromabwärtigen Einspritzers (11) macht, wenn eine Strömungsrate von Luft zu der Brennkammer (13c) kleiner als eine vorbestimmte Größe ist, und einen Anteil von Einspritzung des Einspritzers (7) zu einem konstanten Anteil von Einspritzung macht, der kleiner ist, als ein Anteil von Einspritzung des stromabwärtigen Einspritzers (11).

15. Brennkraftmaschine nach einem der Ansprüche 1 bis 14, **dadurch gekennzeichnet, dass** zumindest ein Teil der Steuerungsvorrichtung in der Einlasskammer (12) angeordnet ist.

16. Fahrzeug, aufweisend die Brennkraftmaschine nach einem der Ansprüche 1 bis 15.

## Revendications

1. Moteur comprenant
un orifice d'introduction (10) par lequel de l'air est introduit dans une chambre d'admission (12),
un passage d'admission (9) qui comprend une ouverture qui débouche dans la chambre d'admission et par laquelle l'air contenu dans la chambre d'admission (12) est amené de ladite ouverture vers une chambre de combustion (13c),
un injecteur (7) qui injecte du carburant entre l'orifice d'introduction (10) et l'ouverture,
un passage d'échappement (15) par lequel les gaz de combustion sont guidés à partir de la chambre de combustion (13c), et
un mécanisme de commande conçu pour modifier la caractéristique de couple du moteur,
**caractérisé en ce que** le mécanisme de commande comprend un mécanisme de variation de longueur de passage (40) qui fait varier une longueur du passage d'admission pour utiliser des ondes de pression générées dans le passage d'admission (9) et/ou dans le passage d'échappement (15), de manière à supprimer des creux dans une courbe caractéristique de couple indiquant un changement de couple par rapport à un changement de vitesse du moteur, étant précisé que le mécanisme de variation de longueur de passage (40) comprend un corps cylindrique (23, 116) qui présente une ouverture amont et une ouverture aval, et un mécanisme d'entraînement (30-35 ; 120, S1, 123-128) qui soumet le corps cylindrique (23, 116) et le passage d'admission (9) à un déplacement relatif dans une direction longeant le passage, entre un premier état dans lequel le corps cylindrique (23, 116) et le passage d'admission (9) sont en contact l'un avec l'autre, et un second état dans lequel le corps cylindrique (23, 116) et le passage d'admission (9) se séparent l'un de l'autre.

2. Moteur selon la revendication 1, **caractérisé en ce que** le mécanisme de commande fait varier la caractéristique de couple à une vitesse supérieure à la vitesse à laquelle la caractéristique de couple varie en raison de l'injection de carburant de l'injecteur (7).

3. Moteur selon la revendication 1 ou 2, **caractérisé en ce que** le mécanisme de commande réalise une commande pour synchroniser la phase d'ondes de pression générées dans le passage d'admission (9) et le rythme de l'admission de la chambre de combustion (13c).

4. Moteur selon l'une des revendications 1 à 3, **caractérisé en ce que** le mécanisme de commande réalise une commande pour synchroniser la phase d'ondes de pression générées dans le passage d'échappement (15) et le rythme de l'admission de la chambre de combustion (13c).

5. Moteur selon l'une au moins des revendications 1 à 4, **caractérisé en ce que** l'injecteur (7) injecte un carburant sur un côté amont de l'ouverture amont disposée quand le corps cylindrique (23, 116) est déplacé vers un côté amont.

6. Moteur selon l'une au moins des revendications 1 à 5, **caractérisé en ce que** le passage d'admission (9) est fixé au corps de moteur (23, 116), et le mécanisme d'entraînement (30-35 ; 120, S1, 123-128) déplace le corps cylindrique (23, 116).

7. Moteur selon l'une au moins des revendications 1 à 6, **caractérisé en ce que** l'injecteur (7) injecte un carburant de manière à avoir la même répartition sur le côté amont de l'ouverture amont.

8. Moteur selon l'une des revendications 1 à 7, **caractérisé en ce qu'**un orifice d'admission (13f) est formé sur la chambre de combustion (13c), et
comprenant par ailleurs une soupape d'admission (13b) qui ouvre et ferme l'orifice d'admission (13f), et un mécanisme d'ouverture et de fermeture (13a) qui entraîne la soupape d'admission (13b),
et étant précisé que le mécanisme de commande comprend un mécanisme de variation de rythme d'admission qui fait varier le rythme d'ouverture et de fermeture de la soupape d'admission (13b) et une période d'ouverture de ladite soupape d'admission (13b) causée par le mécanisme d'ouverture et de fermeture de soupape (13a).

9. Moteur selon l'une des revendications 1 à 8, **caractérisé en ce que** le mécanisme de commande comprend un mécanisme de variation de longueur de passage qui fait varier une longueur du passage d'échappement (15).

10. Moteur selon l'une des revendications 1 à 9, **caractérisé en ce qu'**un orifice d'échappement est formé sur la chambre de combustion (13c), et
comprenant par ailleurs une soupape d'échappement (13e) qui ouvre et ferme l'orifice d'échappement, et un mécanisme d'ouverture et de fermeture de soupape (13d) qui entraîne la soupape d'échappement (13e), et étant précisé que le mécanisme de commande comprend un mécanisme de variation de rythme d'échappement qui fait varier le rythme de l'ouverture et de la fermeture de la soupape d'échappement (13e) et une période de rythme de l'ouverture de ladite soupape d'échappement (13e) causée par le mécanisme d'ouverture et de fermeture de soupape (13d).

11. Moteur selon l'une des revendications 1 à 10, **caractérisé par** un élément de réflexion qui réfléchit des ondes de pression, et étant précisé que le mécanisme de commande comprend un mécanisme de variation de zone de réflexion qui fait varier une zone de réflexion dudit élément de réflexion.

12. Moteur selon l'une des revendications 1 à 11, **caractérisé par** un injecteur aval (11) qui injecte un carburant entre le papillon des gaz et la chambre de combustion (13c), et un dispositif de commande d'injection qui commande l'injecteur (7) et l'injecteur aval (11), et étant précisé que le dispositif de commande d'injection continue l'injection de carburant à partir de l'injecteur (7) avant et après la commande réalisée par le mécanisme de commande .

13. Moteur selon l'une des revendications 1 à 11, **caractérisé par** un injecteur aval (11) qui injecte un carburant entre le papillon des gaz et la chambre de combustion (13c), et un dispositif de commande d'injection qui commande l'injecteur (7) et l'injecteur aval (11), et étant précisé que le dispositif de commande d'injection maintient un rapport d'injection de l'injecteur (7) et de l'injecteur aval (11) avant et après la commande réalisée par le mécanisme de commande.

14. Moteur selon l'une des revendications 1 à 11, **caractérisé par** un injecteur aval (11) qui injecte un carburant entre le papillon des gaz et la chambre de combustion (13c), et un dispositif de commande d'injection qui commande l'injecteur (7) et l'injecteur aval (11), et étant précisé que le dispositif de commande d'injection rend un rapport d'injection de l'injecteur (7) inférieur à un rapport d'injection de l'injecteur aval (11) quand un débit d'air vers la chambre de combustion (13c) est inférieur à une quantité prédéterminée, et fait du rapport d'injection de l'injecteur (7) un rapport d'injection constant qui est inférieur à un rapport d'injection de l'injecteur aval (11).

15. Moteur selon l'une des revendications 1 à 14, **caractérisé en ce qu'**une partie au moins du mécanisme de commande est disposée dans la chambre d'admission (12).

16. Véhicule comprenant le moteur selon l'une des revendications 1 à 15.
